Europäisches Patentamt

European Patent Office

Office européen des brevets

(19)

(11) Numéro de publication: **0 060 963**
A2

# (12) DEMANDE DE BREVET EUROPEEN

(21) Numéro de dépôt: 81830154.1

(22) Date de dépôt: 08.09.81

(51) Int. Cl.³: **B 65 D 65/38**
**B 65 D 75/26**

(30) Priorité: 24.03.81 IT 1157681 U

(43) Date de publication de la demande:
29.09.82 Bulletin 82/39

(84) Etats contractants désignés:
AT BE CH DE FR GB LI LU NL SE

(71) Demandeur: Papeschi, Goffredo
Via del Cimitero 2b
I-55060 Vorno (LU)(IT)

(72) Inventeur: Papeschi, Goffredo
Via del Cimitero 2b
I-55060 Vorno (LU)(IT)

(74) Mandataire: Martini, Lazzaro
Ufficio Brevetti Ing. Lazzaro Martini Via Brunelleschi, 1
I-50123 Firenze(IT)

(54) Feuille de papier à envelopper et protéger denrées alimentaires doublée avec deux feuilles de polyéthylène ou similaire et dont une est volante.

(57) Pour obtenir une feuille à envelopper et proteger les denrées alimentaires on double avec une feuille (1) de papier, une première feuille (2) de polythène complètement adhérente au papier (1) et une deuxième feuille (4) de polythene, relieé le long du dos avec la feuillee (1) de papier ou la première feuille (2) de polythene et donc volante.

Fig. 1

EP 0 060 963 A2

– 1 –

<u>Feuille de papier à envelopper et proteger denrées
alimentaires doublée avec deux feuilles de polythène ou similaire et dont une est volante.</u>

L'invention concerne une feuille de papier à
envelopper des produits, en particulier denrées
alimentaines, qui est doublée avec deux feuilles
ou films superposées de polythène ou similaire,
dont l'une est entièrement attachée au papier et
l'autre, se trouvant au-dessus, est volante.
On connait l'utilisation de feuilles de papier
doublées avec une feuille ou un film de polythène
servant à envelopper des produits de différentes
sortes et en particulier des denrées alimentaires,
avant de recouvrir les produits, d'une seconde et
simple feuille de papier ou en polythène ou similaire.
Cette façon d'opérer comporte non seulement une
perte de temps pour l'utilisateur, parce qu'il
doit prendre deux feuilles, mais comporte également l'occupation, dans le milieu d'utilisation,
d'un double espace, à savoir la pile de papier
doublé et celle des feuilles simples.

La présente invention a pour but d'éliminer ces in‑convénients.

L'invention telle qu'elle est caractérisée dans les rivendications resoud le problème consistant à obte‑nir une feuille de papier, entièrement doublée avec une feuille de polythène, pourvu d'une seconde feuil‑le volante de polythène pour proteger le produit à envelopper.

Nous avons obtenu ce résultat conformément à l'in‑vention, en adoptant l'idée de fixer, par un de ses bords, la seconde feuille de polythène au des‑sus et le long d'un bord de la feuille de papier ou de la première feuille de polythène.

Les avantages obtenus grâce a cette invention con‑sistent essentiellement dans le fait que: le ma‑ximum d'hygiène est assuré; le temps de confection de l'enveloppement est écourté; l'espace occupé par une pile de feuilles est réduit; l'utilisation est plus facile et plus pratique; la fabrication est simple et rapide; le coût est réduit et étudié.

L'invention sera exposée ci‑après plus en detail et à l'aide du dessin annexé representant et seu‑lement schématiquement un mode d'execution.

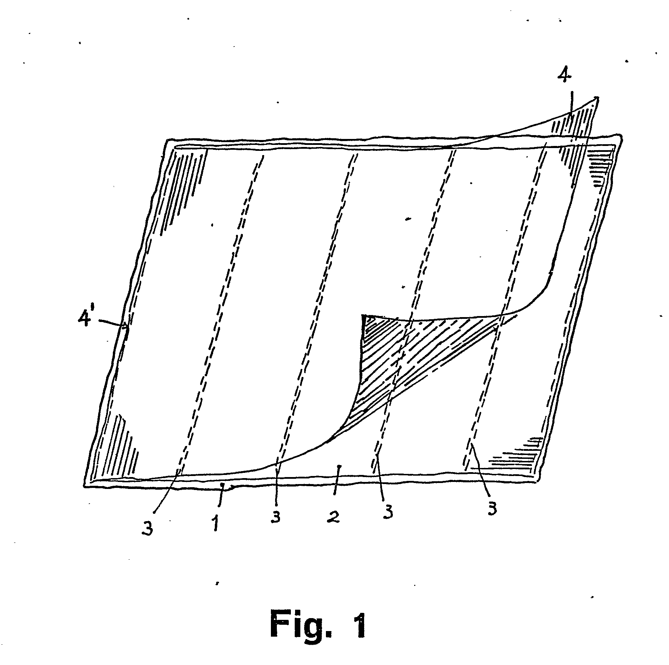

La seule Figure 1 représente la vue d'ensemble assonometrique d'une feuille de papier doublée avec deux feuilles de polythène ou similaire, con‑forme à l'invention.

Réduite à sa structure essentielle et par référen‑ce au dessin annexé, une feuille de papier doublée avec deux feuilles, ou films, de polythène dont une est volante conformément à l'invention est formée par: une feuille (1) de papier ayant la fonction d'armature externe; une première feuille ou film (2) de polythène, située au-dessus de cette feuille (1) de papier et rendue adhérente à celle-ci sur toute sa superficie au moyen de points ou de traits (3) transversaux et/ou longitudinaux de colle, et ayant le rôle de rendre cette armature imperméable; une deuxième feuille ou film (4) de polythène, attachée, par un côté (4') à un côté de cette feuille de papier (1) ou de la première feuille (2) de polythène et donc volante, ayant la fonction de couvrir et de protéger le produit devant être enveloppé.

Ces feuilles (la première et la deuxième) à contact du produit à envelopper peuvent être de polythène à grande ou faible densité ou de polyéthylène expansé ou gaufré, ou aussi de polypropylène et similaire.

Ce feuille de papier doublé peut être réalisé selon différentes méthodes: une de celles-ci consiste à doubler complètement avec une bande continue de papier, une page d'un ruban tubulaire continu de polythène, puis de couper en deux ce complexe par une coupe continue longitudinale et médiane, puis enfin de sectionner chacune des deux moitiés par de nombreuses coupes transversales.

Une autre méthode consiste à doubler complètement avec une bande continue de papier, une page d'une bande continue monopli de polythène, puis enfin de sectionner ce complexe par de nombreuses coupes transversales.

Une autre méthode consiste à appliquer au-dessus d'une bande continue de papier, au préalable complètement doublée avec une feuille continue de polythène, une deuxième feuille continue de polythène, en en fixant un des bords avec de la colle ou
à l'aide d'un autre moyen connu, en marge du dos
de la feuille de polythène ou de papier située au-
dessous.

- 5 -

REVENDICATIONS

1)      Une feuille de papier à envelopper et proteger denrées alimentaires caractérisée par le
fait qu'elle est doublée par deux feuilles de protection du produit, dont une des deux feuilles est
complètement adhérente au papier et dont l'autre,
située audessus de la première, est volante.

2)      Une feuille de papier doublée selon 1) caractérisée par le fait que les deux feuilles de
protection du produit sont reliées entre elles le long
du dos et sont produites à partir d'un unique rubain tubulaire.

3)      Une feuille de papier doublée selon 1) caractérisée par le fait que les deux feuilles de
protection du produit sont reliées entre elles le
long du dos et sont produites à partir d'un unique
rubain monopli,

4)      Une feuille de papier doublée selon 1) caracterisée par le fait que les deux feuilles de
protection du produit sont distinctes entre elles
et, celle volante est fixée en marge du dos de la
première feuille de protection ou de la feuille de
papier.

5)      Une feuille de papier doublée selon 1) caracterisée par le fait qu'au moins une des deux
feuilles de protection du produit est de polythène.

6)      Une feuille de papier doublée selon 1) caracterisée par le fait qu'au moins une des deux
feuilled de protection du produit est en polyéthylène.

7)      Une feuille de papier doublée selon 1) caracterisée par le fait qu'au moins une des deux feuilles de protection du produit est en polypropylène.

**Fig. 1**